# EUROPEAN PATENT SPECIFICATION

(11) **EP 3 716 773 B1**
(45) Date of publication and mention of the grant of the patent: **20.03.2024**
(21) Application number: 18811008.4
(22) Date of filing: 27.11.2018
(51) Int. Cl.: A23C 9/152, A23C 11/04, A23C 11/08, A23L 2/52, A23F 3/14, A23F 5/00

(54) **CREAMERS WITH IMPROVED TEXTURE/MOUTHFEEL AND METHOD OF MAKING THEREOF**
KAFFEEWEISSER MIT VERBESSERTER TEXTUR/VERBESSERTEM MUNDGEFÜHL UND VERFAHREN ZUR HERSTELLUNG DAVON
SUCCÉDANÉS DE CRÈME À TEXTURE/SENSATION EN BOUCHE AMÉLIORÉES ET LEUR PROCÉDÉ DE FABRICATION

(30) Priority: 01.12.2017 US 201762593331 P
(43) Date of publication of application: 07.10.2020
(73) Proprietor: Société des Produits Nestlé S.A., 1800 Vevey (CH)
(72) Inventor: BEZELGUES, Jean-Baptiste, Beijing 100095 (CN); OCTAVIA, Winnie, Delaware OH 43015 (US); NELSON, Richard, Prescott AZ 86301 (US); FU, Xiaoping, Dublin OH 43016 (US); FU, Jun-Tse Ray, Dublin OH 43016 (US); SHER, Alexander A, Dublin OH 43017 (US)
(74) Representative: Vossius & Partner Patentanwälte Rechtsanwälte mbB
(86) International application number: PCT/EP2018/082636
(87) International publication number: WO 2019/105908

(56) References cited:
- EP-B1- 2 978 320
- WO-A1-2013/092693
- WO-A1-2017/098022
- WO-A1-2017/162701
- US-A1- 2004 062 846
- US-A1- 2016 374 360

## Description

### Field of the invention

The present invention relates to coffee creamers and the method to produce the same. More specifically, the present disclosure is directed to coffee creamers with improved texture/mouthfeel.

### Background of the invention

Creamers are widely used as whitening agents with hot and cold beverages such as, for example, coffee, cocoa, tea, etc. Creamers can be in liquid or powder forms. A liquid creamer may be intended for storage at ambient temperatures or under refrigeration, and is expected to exhibit stability and retain a constant viscosity over time during storage without phase separation, creaming, gelation and sedimentation. A good creamer while providing a superior taste and mouthfeel dissolves rapidly and provides a good whitening capacity without feathering and/or sedimentation. Mouthfeel, also denoted richness, texture or creaminess, is usually provided by the oil emulsion present in the creamer.

Creamers such as non-dairy based comprise sodium caseinate which act as a whitener and emulsifier. Recently alternatives to sodium caseinate has emerged. Micellar casein has been developed to replace sodium caseinate in the liquid creamers. Micellar casein is known as an emulsifier, however functionality of micellar casein in the complex liquid creamer matrix was not known, namely if micellar casein could be used to replace sodium caseinate without compromising liquid creamer shelf-life physical and chemical stability, as well as its sensory impact and behavior in hot acidic environment when added to coffee. In addition, the creamer must tolerate most of coffee/tea brewing water hardness.

W2017/098022 A1 relates to ready to drink plant protein beverages having improved stability, texture and mouthfeel. The beverages comprise a plant protein, and a texturing/stabilizing system, wherein the texturing/stabilizing system consists of a stabilizer, or consists of a stabilizer and an emulsifier, provided that only one stabilizer is present in the system, or only one stabilizer and only one emulsifier is present in the system.

It was surprisingly found that the micellar casein at the specific concentration in combination with low molecular weight emulsifiers provided good shelf life stability. Moreover, it did not compromise texture/mouthfeel and whitening capacity when added to hot coffees. Similar creamer behavior was found when added to hot tea. Additionally, the whitened coffee and tea had no instability issues such as feathering and/or de-oiling.

The present invention relates to stabilizing systems and composition of non-dairy shelf-stable aseptically packaged liquid creamers, and to the process of making thereof.

### Summary of the Invention

The present invention now solves the foregoing problems by providing a stable beverage composition having enhanced or improved organoleptic properties.

Provided is composition of aseptic shelf-stable liquid creamers, formed by the interaction of oil(s)/fat(s), protein(s), carbohydrate(s), and optionally sweetener(s), flavor(s), and stabilized by the use of complex systems containing the combinations of hydrocolloid(s) and emulsifier(s).

In a first aspect, the invention relates to a liquid creamer composition comprising high oleic oils; micellar casein; emulsifiers comprising a mixture of mono- and di-glycerides and diacetyl tartaric acid esters of mono- and di-glycerides; and hydrocolloids comprising a mixture of carrageenan, microcrystalline cellulose and carboxymethyl cellulose.

The aseptic creamers are shelf-stable at 4 and 20°C for at least 6 months, 3 months at 30°C, and 1 month at 38°C.

The creamers are easily dispersible in coffee, stable in hot and cold acidic environment, without feathering, breaking emulsion, de-oiling, flocculation and sedimentation. When added to coffee or tea or other liquid products, the creamers provide improved mouthfeel, full body, smooth texture, and also a good flavor with no off-flavor notes developed during storage time.

Though the present invention discloses the coffee creamers, use of the creamers, it is not limited for only coffee applications. For example, the creamers can be also used for other beverages, such as tea or cocoa, or used with cereals or berries, creamers for soups, in many cooking applications, etc.

The products of the invention present excellent organoleptic properties, in particular in terms of texture and mouthfeel even when very low levels of fat are used. Besides, the products of the invention show good stability during shelf life.

Another aspect of the present invention relates to a process of preparing the creamer composition comprising: dissolving the ingredients in hot water under agitation; sterilizing the composition using ultra-high temperature (UHT) treatment; homogenizing the composition at total pressure ranging from 135-300 bars and temperature ranging from 65 to 80 °C, wherein homogenization performed before UHT treatment, after UHT treatment, or before and after UHT treatment; sterilizing at UHT conditions at 136-150 °C for 3-30 seconds; cooling the obtained beverage creamer base product to 25°C or below; and filling aseptically UHT beverages in aseptic containers.

### Brief description of figures

Figure 1. Effect of micellar casein concentration on particle size distribution of liquid creamers: a) 0.65%, b) 0.765% and c) 0.90% micellar casein.
Figure 2. Effect of micellar casein concentration on Integral Transmission measured by Lumisizer of liquid creamers: a) 0.65%, b) 0.765% and c) 0.90% micellar casein.

### Detailed Description of the Invention

In the following description, the % values are in wt% unless otherwise specified.

The invention pertains to liquid creamers with good texture/mouthfeel and stability during shelf life as result of using specific combination of ingredients.

Advantageously and unexpectedly, a unique combination of the hydrocolloid texturizing/stabilizing system ingredients was found that improves beverage texture/mouthfeel and provides a pleasant, smooth creamy taste when the creamers added to coffee. In addition, the creamers have good physico-chemical stability during shelf life. The novel hydrocolloid texturizing /stabilizing system includes high oleic oils; emulsifiers comprising a mixture of mono- and di-glycerides and diacetyl tartaric acid esters of mono- and di-glycerides; and hydrocolloids comprising a mixture of carrageenan, microcrystalline cellulose and carboxymethyl cellulose.

According to the present invention, the creamer comprises high oleic oils ranging from 2 to 10 wt/wt % of the creamer composition. The high oleic oils comprises a vegetable oil selected from the group consisting of high oleic canola, high oleic soybean oil, high oleic sunflower, high oleic safflower or a combination thereof.

Further in the present context unless otherwise indicated % of a component means the % of weight based on the weight of the creamer composition, i.e. weight/weight %.

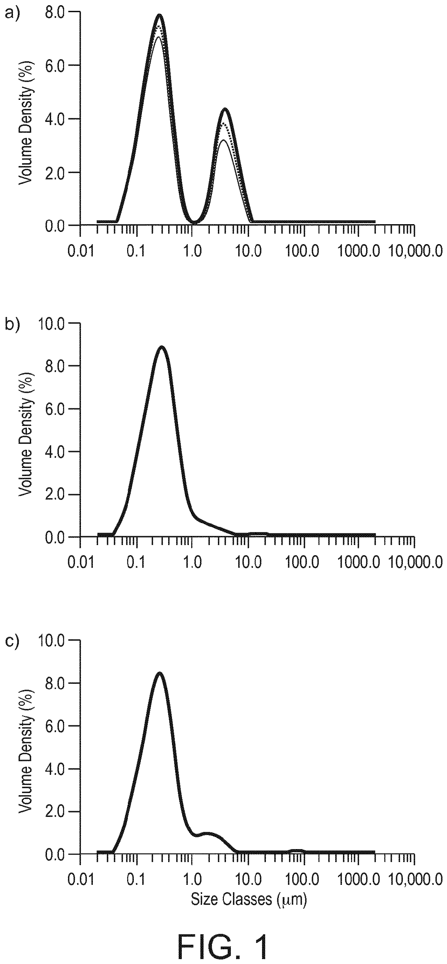

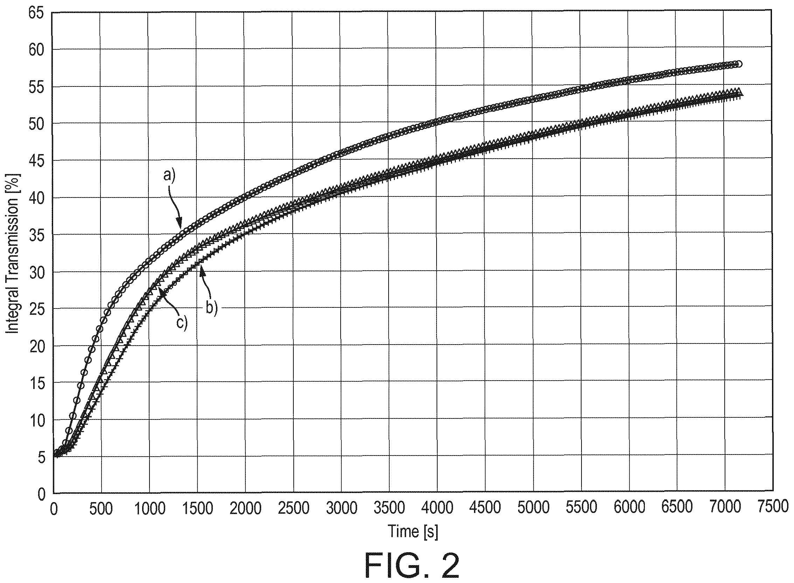

In one embodiment of the present invention, the creamer comprises micellar casein ranging from 0.5 to 1% by weight of the creamer composition. Preferably, micellar casein ranging from 0.65 to 0.9% by weight of the creamer composition; more preferably, micellar casein ranging from 0.70 to 0.85% by weight of the creamer composition. As indicated in figure 1 and 2, the creamer comprises 0.765% micellar casein showed the most stable emulsions with lowest Lumisizer Integral Transmission and most uniformed emulsion particles.

In another embodiment of the present invention, the creamer comprises sugar comprising sucrose, lactose, glucose, fructose and/or combinations ranging from 0-35% of the creamer composition. For example the creamer comprises sugar at from 0-35% of the creamer composition. For example, the creamer comprises sugar selected from the group consisting of sucrose, lactose, glucose, fructose and combinations of these ranging from 0-35% of the creamer composition.

In another embodiment of the present invention, the creamer comprises a sweetener in an amount of about 0.0003 to about 10% by weight of the composition.

By "sweetener" it is to be understood an ingredient and/or a mixture of ingredients, which imparts sweetness to the final product. These include natural sugars like cane sugar, beet sugar, molasses, other plant derived nutritive and non-nutritive sweeteners, and chemically synthesized non-nutritive high intensity sweeteners.

In one embodiment of the present invention, the creamer comprises oil-in-water emulsion and the mean particle size of oil-in-water emulsion ranges from 0.1 to 0.8 micrometers, for example the D90 particle size measured by laser light scattering ranges from 0.1 to 0.8 micrometers.

### Liquid beverage composition and product

A beverage composition according to the invention comprises the creamer as described in the present invention and may be any beverage composition, meant to be consumed by a human or animal, such as e.g. a beverage, e.g. a coffee beverage, a cocoa or chocolate beverage, a malted beverage, a fruit or juice beverage, a carbonated beverage, a soft drink, or a milk based beverage; a performance nutrition product, , powder or ready-to-drink beverage; a medical nutrition product; a dairy product, e.g. a milk drink, a yogurt or other fermented dairy product; a product for improving mental performance or preventing mental decline, or a skin improving product.

### Beverage or beverage composition

A beverage according to the invention comprises the creamer as described in the present invention and may e.g. be in the form of liquid or liquid concentrate to be mixed with a suitable liquid, e.g. water or milk, before consumption, or a ready-to-drink beverage. By a ready-to-drink beverage is meant a beverage in liquid form ready to be consumed without further addition of liquid. A beverage according to the invention may comprise any other suitable ingredients known in the art for producing a beverage, such as e.g. sweeteners, e.g. sugar, such as invert sugar, sucrose, fructose, glucose, or any mixture thereof, natural or artificial sweetener; aromas and flavors, e.g. fruit, cola, coffee, or tea aroma and/or flavor; fruit or vegetable juice or puree; milk; stabilizers; emulsifiers; natural or artificial color; preservatives; antioxidants, e.g. ascorbic acid; and the like.

Any suitable acid or base may be used to achieve a desired pH of the product, e.g. citric acid or phosphoric acid. A beverage of the invention may be carbonated; carbon dioxide may be added by any suitable method known in the art. In a preferred embodiment a beverage comprises up to 10% sucrose or another sweetener in an amount yielding an equal degree of sweetness, more preferably between 2% and 5% sucrose or another sweetener in an amount yielding an equal degree of sweetness. If the beverage is a liquid concentrate or a ready-to-drink beverage it may be subjected to a heat treatment to increase the shelf life or the product, e.g. by retorting, UHT (Ultra High Temperature) treatment, HTST (High Temperature Short Time) pasteurization, batch pasteurization, or hot fill.

According to a particular embodiment, the pH is controlled by the presence of an acidic component. The acidic component is preferably selected from the group consisting of molasses, an organic acid such as citric acid, an inorganic acid such as phosphoric acid, fruit derived acids and fermentation derived acids.

The reduction of fat in beverages without compromising the indulgent quality of the product is one of the main challenges faced by the industry. The present invention is overcoming this issue in providing low fat or even non-fat products with similar texture and sensory attributes than those having higher fat contents in terms of creaminess and mouthfeel.

The products may thus include a stabilizer system. A "stabilizer system" is to be understood as a mixture of ingredients, which contributes to the stability of the beverage product with respect to shelf life, overall texture properties etc. Thus, the stabilizer system may comprise any ingredients, which are of physical and functional importance to the beverage.

The stabilizer system that may be used in the present products preferably comprises at least one natural emulsifier.

Natural emulsifiers include for example egg yolk, buttermilk, raw acacia gum, rice bran extract or mixtures thereof. The natural emulsifiers have the advantage of conferring to the finished product improved texture and mouthfeel.

According to another particular embodiment, the stabilizer system used in the products of the invention comprises at least one non-natural emulsifier. Any food grade emulsifier typically used in beverage could be used. suitable emulsifiers include sugar esters, emulsifying waxes such as beeswax, carnauba wax, candelilla wax, plant or fruit waxes and animal waxes, polyglycerol fatty acid esters, polyglycerol polyricinoleate (PGPR), polysorbates (polyoxyethylene sorbitan esters), monoglycerides, diglycerides, lecithin and mixtures thereof.

In another embodiment of the present invention, the creamer comprises emulsifiers comprising a mixture of mono and diglycerides and tartaric acid esters of monoglycerides, wherein the mono and diglycerides range from 0.1 to 0.125 wt% by weight the creamer composition and wherein the tartaric acid esters of monoglycerides range from 0.3 to 0.375% by weight the creamer composition.

The product may additionally comprise flavors or colorants. These are used in conventional amounts which can be optimized by routine testing for any particular product formulation.

### EXAMPLES

By way of example and not limitation, the following examples are illustrative of various embodiments of the present disclosure.

Particle size distribution was determined by using a laser light scattering Mastersizer 3000 MA (Malvern Instrument) equipped with Hydro 2000G dispersion unit.

Integral Transmission of liquid creamers was measured by Lumisizer (http://www.lumisizer.com).

### EXAMPLE 1

Liquid creamers were produced as below. 29 kg sugar, 400 g dipotassium phosphate, 350 g of microcrystalline cellulose with carboxymethyl cellulose, 14 g carrageenan, 100 g mono- and di-glycerides, 300 g diacetyl tartaric acid esters of mono- and di-glycerides; 765 g micellar casein, 15 g were added into 50 kg of hot water (~ 75°C) under high agitation.

Next, 8 kg of high oleic soybean oil was added to the above liquids under high agitation. Then, additional water was added to adjust the total amount to 100kg.

The liquid creamer was pre-homogenized at 135/35 bars, pre-heated, UHT treated for 12 sec at 140°C, homogenized at 135/35 bars, and cooled. Then the liquid creamer was aseptically filled into bottles.

The physico-chemical stability and sensory of creamer and coffee beverages with added liquid creamer were judged by trained panelists. No phase separation (creaming, de-oiling, marbling, etc), gelation, and practically no viscosity changes were found during the storage.

The liquid creamer has good appearance, mouth-feel, smooth texture and a good flavor without "of" taste when added to coffee.

### EXAMPLE 2

A liquid creamer was prepared as in Example 1 but using 650 g micellar casein.

The physico-chemical stability and sensory of creamer and coffee beverages with added liquid creamer were judged by trained panelists. No phase separation (creaming, de-oiling, marbling, etc), gelation were found during the storage.

The liquid creamer has good appearance, mouth-feel, smooth texture and a good flavor without "of" taste when added to coffee.

### EXAMPLE 3

A liquid creamer was prepared as in Example 1 but using 900 g micellar casein.

The physico-chemical stability and sensory of creamer and coffee beverages with added liquid creamer were judged by trained panelists. No phase separation (creaming, de-oiling, marbling, etc), gelation were found during the storage.

The liquid creamer has good appearance, mouth-feel, smooth texture and a good flavor without "of" taste when added to coffee.

Particle size distribution and Integral Transmission of products of Examples 1, 2 and 3 are shown in figures 1 and 2. According to the figures, the best stability provided by 0.765% micellar casein, following by 0.90 and 0.65% micellar casein.

### EXAMPLE 4

A liquid creamer was prepared as in Example 1 but using 6.8 kg soybean oil and 500 g micellar casein.

The physico-chemical stability and sensory of creamer and coffee beverages with added liquid creamer were judged by trained panelists. No phase separation (creaming, de-oiling, marbling, etc), gelation were found during the storage.

The liquid creamer has good appearance, mouth-feel, smooth texture and a good flavor without "of" taste when added to coffee.

### EXAMPLE 5

A liquid creamer was prepared as in Example 1 but using 2.4 kg soybean oil and 1.2 kg micellar casein.

The physico-chemical stability and sensory of creamer and coffee beverages with added liquid creamer were judged by trained panelists. No phase separation (creaming, de-oiling, marbling, etc), gelation were found during the storage.

The liquid creamer has good appearance, mouth-feel, smooth texture and a good flavor without "of" taste when added to coffee.

### EXAMPLE 6

A liquid creamer was prepared as in Example 1 but using 2.4 kg soybean oil and 600 g micellar casein.

The physico-chemical stability and sensory of creamer and coffee beverages with added liquid creamer were judged by trained panelists. No phase separation (creaming, de-oiling, marbling, etc), gelation were found during the storage.

The liquid creamer has good appearance, mouth-feel, smooth texture and a good flavor without "of" taste when added to coffee.

## Claims

1. A liquid creamer composition comprising
high oleic oils;
micellar casein;
emulsifiers comprising a mixture of mono- and di-glycerides and diacetyl tartaric acid esters of mono- and di-glycerides; and
hydrocolloids comprising a mixture of carrageenan, microcrystalline cellulose and carboxymethyl cellulose,
wherein the high oleic oils ranges from 2 to 10 % of the creamer composition.

2. The creamer of claim 1 wherein the high oleic oils comprises a vegetable oil selected from the group consisting of high oleic canola, high oleic soybean oil, high oleic sunflower, high oleic safflower or a combination thereof.

3. The creamer of any one of claims 1 to 2 wherein micellar casein ranges from 0.5 to 1.2 % by weight the creamer composition.

4. The creamer of claim 3 wherein micellar casein ranging from 0.65 to 0.9% by weight of the creamer composition; preferably, ranging from 0.70 to 0.85% by weight of the creamer composition.

5. The creamer of any one of claims 1 to 4 wherein the mono and di-glycerides range from 0.1 to 0.125 % by weight the creamer composition and wherein the diacetyl tartaric acid esters of mono- and di-glycerides range from 0.3 to 0.375 % by weight the creamer composition.

6. The creamer of any one of claims 1 to 5, further comprises sugar selected from the group consisting of sucrose, lactose, glucose, fructose and combinations of these, the sugar ranging from 0-35% % of the creamer composition.

7. The creamer according to any one of claims1 to 6, wherein carrageenan is present in amount ranging from 0.005 to 0.02 %.

8. The creamer according to any one of claims 1 to 7, wherein mixture of microcrystalline cellulose and carboxymethyl cellulose is present in amount ranging from 0.2 - to 0.5 %.

9. The creamer according to any one of the preceding claims, further includes a pH buffer.

10. The creamer according to any one of claims 1 to 9, wherein the mean particle of oil-in-water emulsion ranging from 0.1 to 0.8 micrometers.

11. A beverage comprising water, beverage-forming components and a sufficient amount of the creamer composition according to any of the preceding claims to provide whitening, good texture and mouthfeel.

12. The beverage of claim 11 wherein the beverage forming component is coffee, tea, or/and chocolate.

13. A process of preparing the creamer composition according to any of the preceding claims comprising:
dissolving the ingredients in hot water under agitation;
sterilizing the composition using ultra-high temperature (UHT) treatment;
homogenizing the mixture at total pressure ranging from 135-300 bars and temperature ranging from 65 to 80 °C, wherein homogenization performed before UHT treatment, after UHT treatment, or before and after UHT treatment;
sterilizing at UHT conditions at 136-150 °C for 3-30 seconds
cooling the obtained beverage base product to 25°C or below; and
filling aseptically UHT beverages in aseptic containers.

14. The process of claim 13, wherein the homogenization is in two steps comprising the first step wherein liquid mixture is exposed to a pressure in the range of 100 to 250 bars and followed by a second step having pressure in the range of 35 to 50 bars.

## Patentansprüche

1. Flüssige Kaffeeweißerzusammensetzung, umfassend
Öle mit hohem Ölsäuregehalt;
micellares Casein;
Emulgatoren, umfassend eine Mischung aus Mono- und Diglyceriden und Diacetylweinsäureestern von Mono- und Diglyceriden; und
Hydrokolloide, umfassend eine Mischung aus Carrageenan, mikrokristalliner Cellulose und Carboxymethylcellulose,
wobei die Öle mit hohem Ölsäuregehalt von zu 2 bis 10 % der Kaffeeweißerzusammensetzung reichen.

2. Kaffeeweißer nach Anspruch 1, wobei die Öle mit hohem Ölsäuregehalt ein pflanzliches Öl umfassen, das aus der Gruppe ausgewählt ist, bestehend aus Raps mit hohem Ölsäuregehalt, Sojabohnenöl mit hohem Ölsäuregehalt, Sonnenblume mit hohem Ölsäuregehalt, Distel mit hohem Ölsäuregehalt oder einer Kombination davon.

3. Kaffeeweißer nach einem der Ansprüche 1 bis 2, wobei micellares Casein von zu 0,5 bis 1,2 Gew.-% der Kaffeeweißerzusammensetzung reicht.

4. Kaffeeweißer nach Anspruch 3, wobei micellares Casein von zu 0,65 bis 0,9 Gew.-% der Kaffeeweißerzusammensetzung reicht; vorzugsweise wobei es von zu 0,70 bis 0,85 Gew.-% der Kaffeeweißerzusammensetzung reicht.

5. Kaffeeweißer nach einem der Ansprüche 1 bis 4, wobei die Mono- und Diglyceride von zu 0,1 bis 0,125 Gew.-% der Kaffeeweißerzusammensetzung reichen, und wobei die Diacetylweinsäureester von Mono- und Diglyceriden von zu 0,3 bis 0,375 Gew.-% der Kaffeeweißerzusammensetzung reichen.

6. Kaffeeweißer nach einem der Ansprüche 1 bis 5, wobei er ferner Zucker umfasst, der aus der Gruppe ausgewählt ist, bestehend aus Saccharose, Lactose, Glucose, Fructose und Kombinationen davon, wobei der Zucker von zu 0-35 % der Kaffeeweißerzusammensetzung reicht.

7. Kaffeeweißer nach einem der Ansprüche 1 bis 6, wobei Carrageenan in einer Menge vorhanden ist, die von 0,005 bis 0,02 % reicht.

8. Kaffeeweißer nach einem der Ansprüche 1 bis 7, wobei die Mischung aus mikrokristalliner Cellulose und Carboxymethylcellulose in der Menge vorhanden ist, die von 0,2 bis 0,5 % reicht.

9. Kaffeeweißer nach einem der vorstehenden Ansprüche, der ferner einen pH-Puffer einschließt.

10. Kaffeeweißer nach einem der Ansprüche 1 bis 9, wobei die mittlere Teilchengröße einer Öl-in-Wasser-Emulsion von 0,1 bis 0,8 Mikrometern reicht.

11. Getränk, umfassend Wasser, getränkebildende Komponenten und eine ausreichende Menge der Kaffeeweißerzusammensetzung nach einem der vorstehenden Ansprüche, um Weißfärbung, gute Textur und Geschmacksfülle bereitzustellen.

12. Getränk nach Anspruch 11, wobei die getränkebildende Komponente Kaffee, Tee, oder/und Schokolade ist.

13. Verfahren zum Herstellen der Kaffeeweißerzusammensetzung nach einem der vorstehenden Ansprüche, umfassend:
Auflösen der Zutaten in heißem Wasser unter Rühren;
Sterilisieren der Zusammensetzung unter Verwendung einer Ultrahocherhitzungsbehandlung (UHT-Behandlung);
Homogenisieren der Mischung bei Gesamtdruck, der von 135-300 bar reicht, und einer Temperatur, die von 65 bis 80 °C reicht, wobei eine Homogenisierung vor der UHT-Behandlung, nach der UHT-Behandlung oder vor und nach der UHT-Behandlung durchgeführt wird;
Sterilisieren 3-30 Sekunden lang unter UHT-Bedingungen bei 136-150 °C
Abkühlen des erhaltenen Getränkebasisproduktes auf 25 °C oder niedriger; und
aseptisches Abfüllen der UHT-Getränke in aseptische Behälter.

14. Verfahren nach Anspruch 13, wobei die Homogenisierung in zwei Schritten erfolgt, umfassend den ersten Schritt, wobei flüssige Mischung einem Druck im Bereich von 100 bis 250 bar ausgesetzt wird und gefolgt von einem zweiten Schritt mit Druck im Bereich von 35 bis 50 bar.

## Revendications

1. Composition de succédané de crème liquide comprenant
des huiles à haute teneur en acide oléique ;
de la caséine micellaire ;
des émulsifiants comprenant un mélange de mono- et di-glycérides et d'esters d'acide diacétyltartrique de mono- et di-glycérides ; et
des hydrocolloïdes comprenant un mélange de carraghénane, de cellulose microcristalline et de carboxyméthylcellulose,
dans laquelle les huiles à haute teneur en acide oléique représentent de 2 à 10 % de la composition de succédané de crème.

2. Succédané de crème selon la revendication 1, dans lequel les huiles à haute teneur en acide oléique comprennent une huile végétale choisie dans le groupe constitué de canola à haute teneur en acide oléique, huile de soja à haute teneur en acide oléique, tournesol à haute teneur en acide oléique, carthame à haute teneur en acide oléique ou une combinaison de celles-ci.

3. Succédané de crème selon l'une quelconque des revendications 1 à 2, dans lequel la caséine micellaire représente de 0,5 à 1,2 % en poids de la composition de succédané de crème.

4. Succédané de crème selon la revendication 3, dans lequel la caséine micellaire représente de 0,65 à 0,9 % en poids de la composition de succédané de crème ; de préférence, représentant de 0,70 à 0,85 % en poids de la composition de succédané de crème.

5. Succédané de crème selon l'une quelconque des revendications 1 à 4, dans lequel les mono et di-glycérides représentent de 0,1 à 0,125 % en poids de la composition de succédané de crème et dans lequel les esters d'acide diacétyltartrique des mono- et di-glycérides représentent de 0,3 à 0,375 % en poids de la composition de succédané de crème.

6. Succédané de crème selon l'une quelconque des revendications 1 à 5, comprenant en outre du sucre choisi dans le groupe constitué de saccharose, lactose, glucose, fructose et combinaisons de ceux-ci, le sucre représentant de 0 à 35 % de la composition de succédané de crème.

7. Succédané de crème selon l'une quelconque des revendications 1 à 6, dans lequel le carraghénane est présent en une quantité allant de 0,005 à 0,02 %.

8. **Succédané de crème selon l'une quelconque des revendications** 1 à 7, dans lequel le mélange de cellulose microcristalline et de carboxyméthylcellulose est présent en une quantité allant de 0,2 à 0,5 %.

9. Succédané de crème selon l'une quelconque des revendications précédentes, comportant en outre un tampon de pH.

10. Succédané de crème selon l'une quelconque des revendications 1 à 9, dans lequel la particule moyenne d'émulsion huile-dans-eau va de 0,1 à 0,8 micromètre.

11. Boisson comprenant de l'eau, des composants de formation de boisson et une quantité suffisante de la composition de succédané de crème selon l'une quelconque des revendications précédentes pour fournir un blanchissement, une bonne texture et une bonne sensation en bouche.

12. Boisson selon la revendication 11, dans laquelle le composant de formation de boisson est du café, du thé, et/ou du chocolat.

13. Procédé de préparation de la composition de succédané de crème selon l'une quelconque des revendications précédentes, comprenant :
la dissolution des ingrédients dans de l'eau chaude sous agitation ;
la stérilisation de la composition à l'aide d'un traitement à ultra-haute température (UHT) ;
l'homogénéisation du mélange à une pression totale allant de 135 à 300 bars et une température allant de 65 à 80 °C, dans lequel l'homogénéisation est effectuée avant le traitement UHT, après le traitement UHT, ou avant et après le traitement UHT ;
la stérilisation dans des conditions UHT à 136 à 150 °C pendant 3 à 30 secondes
le refroidissement du produit de base de boisson obtenu à 25 °C ou moins ; et
le remplissage aseptique de récipients aseptiques avec les boissons UHT.

14. Procédé selon la revendication 13, dans lequel l'homogénéisation se fait en deux étapes comprenant la première étape dans lequel du mélange liquide est exposé à une pression comprise dans la plage de 100 à 250 bars et en faisant suivre par une seconde étape ayant une pression comprise dans la plage de 35 à 50 bars.
